(19) Europäisches Patentamt
European Patent Office
Office européen des brevets

(11) **EP 4 745 296 A1**

(12) **EUROPEAN PATENT APPLICATION**
published in accordance with Art. 153(4) EPC

(43) Date of publication:
**20.05.2026 Bulletin 2026/21**

(21) Application number: **24837277.3**

(22) Date of filing: **24.06.2024**

(51) International Patent Classification (IPC):
*D06M 13/50* (2006.01)  *B01J 20/22* (2006.01)
*D04H 1/541* (2012.01)  *D06M 23/00* (2006.01)

(52) Cooperative Patent Classification (CPC):
**D04H 1/407; B01D 53/02; B01J 20/226;**
**B01J 20/28038; B01J 20/3078; B01J 20/3212;**
**B01J 20/3265; B01J 20/3293; B01J 20/3295;**
**C03C 25/47; D04H 1/26; D04H 1/425;**
**D04H 1/43835; D04H 1/5412; D04H 1/732;**  (Cont.)

(86) International application number:
**PCT/JP2024/022786**

(87) International publication number:
**WO 2025/013602 (16.01.2025 Gazette 2025/03)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.07.2023 JP 2023114210**

(71) Applicant: **Kao Corporation**
**Tokyo 103-8210 (JP)**

(72) Inventors:
• **HOSOKAWA, Junji**
**Tokyo 103-8210 (JP)**
• **GOTO, Minoru**
**Tokyo 103-8210 (JP)**
• **WADA, Kosuke**
**Tokyo 103-8210 (JP)**

(74) Representative: **Hoffmann Eitle**
**Patent- und Rechtsanwälte PartmbB**
**Arabellastraße 30**
**81925 München (DE)**

(54) **COMPOSITE SHEET**

(57)   There is provided a composite sheet in which metal organic frameworks are supported in a sheet base material formed of fibers, the composite sheet having high gas adsorption performance. In the composite sheet, metal organic frameworks are dispersed in a sheet base material formed of fibers. The metal organic frameworks are supported on surfaces of the fibers. After the heat treatment, a ratio of a mass of the metal organic frameworks to a mass of the entire composite sheet is 80 mass% or more. One fiber forming a central region of the composite sheet in a thickness direction has a surface coverage by the metal organic frameworks of 60% or more. A surface exposure ratio of the metal organic frameworks is 50% or more.

FIG.1

(52) Cooperative Patent Classification (CPC): (Cont.)
**D06M 13/50; D06M 13/503; D06M 23/10;**
B01D 2253/204; B01D 2253/25; B01D 2257/504

**Description**

Technical Field

The present invention relates to a composite sheet in which metal organic frameworks are supported on a sheet base material.

Background Art

Attention has been focused on metal organic frameworks (MOFs) as high-performance gas adsorption materials because they have a uniform pore size, a high specific surface area, high separation performance, and the like. Meanwhile, MOF is known to be difficult to handle by itself because it is a micron-scale fine powder. In order to deal with this, a technology has been known that a base material such as a non-woven fabric supports MOFs to collectively handle a large number of MOFs (see, for example, Patent Literature 1).

Citation List

Patent Literature

    Patent Literature 1: Japanese Patent Application Laid-open No. 2021-191913
    Patent Literature 2: Chinese Patent Application Laid-open No. 112002938
    Patent Literature 3: Chinese Patent Application Laid-open No. 109881483

Disclosure of Invention

Technical Problem

In order to enhance the gas adsorption performance, it is necessary to support a large number of MOFs by a non-woven fabric. For this purpose, it is advantageous to support MOFs by not only the surface layer portion of the non-woven fabric but also the inside thereof. However, each particle of the MOF tends to stay on the surface layer portion without entering the inside of the non-woven fabric in general methods such as a method of spraying particles of the MOF on the non-woven fabric and a method of impregnating the non-woven fabric with a dispersion liquid of the MOFs.

An object of the present invention relates to provide a composite sheet in which metal organic frameworks are supported in a sheet base material formed of fibers, the composite sheet having high gas adsorption performance.

Solution to Problem

A composite sheet according to an embodiment of the present invention comprises: a sheet base material formed of fibers; and metal organic frameworks dispersed in the sheet base material.

In an embodiment, the metal organic frameworks are supported on surfaces of the fibers.

In an embodiment, a ratio of a mass of the metal organic frameworks to a mass of the entire composite sheet is 80 mass% or more.

In an embodiment, one fiber forming a central region of the composite sheet in a thickness direction has a surface coverage by the metal organic frameworks of 60% or more.

In an embodiment, a surface exposure ratio of the metal organic frameworks is 50% or more.

A method of producing a composite sheet according to an embodiment of the present invention comprises: producing a composite sheet in which metal organic frameworks are supported in a sheet base material formed of fibers.

In an embodiment, a first raw material solution and a second raw material solution are prepared, in which the first raw material solution includes either a metal ion or an organic ligand that are raw materials of the metal organic framework particles and the second raw material solution includes the other.

In an embodiment, the sheet base material is impregnated with the first raw material solution.

In an embodiment, the sheet base material is impregnated with the second raw material solution before the first raw material solution with which the sheet base material is impregnated dries.

In an embodiment, the sheet base material impregnated with the second raw material solution is dried.

In an embodiment, heat treatment is applied to the dried sheet base material.

In an embodiment, a series of steps before the step of applying heat treatment is repeated such that a ratio of a mass of the metal organic frameworks to a mass of the entire composite sheet after the heat treatment is 80 mass% or more, and
the series of steps includes,

impregnating the sheet base material with the first raw material solution; then
impregnating the sheet base material with the second raw material solution before the first raw material solution with which the sheet base material is impregnated dries; and
drying the sheet base material impregnated with the second raw material solution.

Advantageous Effects of Invention

According to the present invention, it is possible to provide a composite sheet in which metal organic frameworks are supported in a sheet base material formed of fibers, the composite sheet having high gas adsorption performance.

Brief Description of Drawings

[Fig. 1] Fig. 1 is a microstructure photograph obtained by imaging the cross section of a composite sheet using SEM.
[Fig. 2] Fig. 2 is a diagram schematically showing the cross section of a fiber forming the composite sheet.
[Fig. 3] Fig. 3 is a flowchart showing a method of producing a composite sheet according to an embodiment of the present invention.

Mode(s) for Carrying Out the Invention

[Basic configuration of composite sheet]

A composite sheet according to an embodiment of the present invention includes a sheet base material and a metal organic framework (MOF).
The sheet base material of the composite sheet according to this embodiment is a base material formed of a fiber in a sheet shape, which is typically a non-woven fabric, but may be a woven fabric, a knitted fabric, a mesh, or the like.
The MOF of the composite sheet according to this embodiment is typically a fine powder including a metal ion and an organic ligand, is dispersed in the sheet base material, and is supported on the surface of the fiber forming the sheet base material. Such a structure is referred to as a porous coordination polymer (PCP) in some cases, but is referred to as a metal organic framework (MOF) throughout the present specification.
Each particle of the MOF used in the composite sheet according to this embodiment is typically porous with numerous pores having uniform pore sizes and functions as a gas adsorption material by adsorbing and holding gas molecules in each pore.
The composite sheet according to this embodiment is a gas adsorption sheet configured to be capable of adsorbing, by causing a sheet base material to collectively support a large number of MOFs in a state capable of effectively exhibiting gas adsorption performance, a large amount of gas as the entire MOFs supported on the sheet base material.

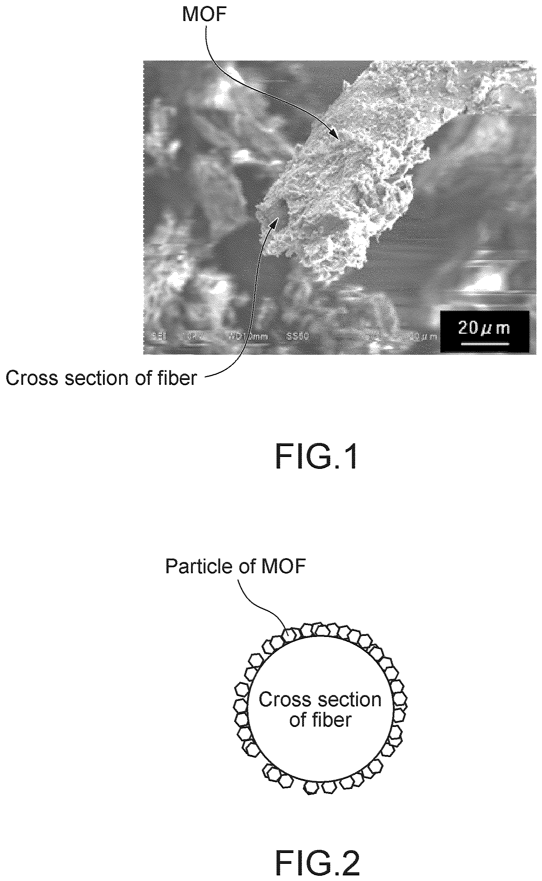

Figs. 1 and 2 show an example of the state in which MOFs are supported on the fiber of the sheet base material of the composite sheet according to this embodiment. The microstructure photograph taken by a scanning electron microscope (SEM) shown in Fig. 1 shows the cross section of a fiber, and the state in which the surface of the fiber is covered with MOFs can be observed. As shown in Fig. 2, most of the surface of the fiber is preferably covered with MOFs. Note that although a single layer of MOFs is fixed to the fiber surface in the example shown in Fig. 2, multiple layers of MOFs may be stacked.
In the composite sheet according to this embodiment, a MOF layer is typically formed on the surface of the fiber.
Here, the MOF layer indicates a state in which aggregates of MOF particles form a layer as a whole. Specifically, the MOF layer includes one or more forms in, for example, the following states: multiple MOFs in a fine powder shape or particle shape is deposited/stacked on the surface of the fiber; MOFs in a fine powder shape or particle shape are generated on the surface of the fiber and grow to cover the surface of the fiber; and particles of adjacent MOFs become unified with the generation and growth to cover the surface of the fiber as a unified film.
In the composite sheet according to this embodiment, the particle size of the MOF may be larger or smaller than the fiber diameter of the sheet base material.
MOFs that can be used in the composite sheet according to this embodiment have various pore sizes depending on the combination of metal ions and organic ligands. Therefore, in the composite sheet according to this embodiment, the pore size of the MOF to be supported on the sheet base material can be determined in accordance with the molecular size of gas to be adsorbed. As a result, in the composite sheet according to this embodiment, it is possible to selectively adsorb a specific gas by the MOF supported on the sheet base material.

The composite sheet according to this embodiment can be used as, for example, a raw material for chemicals by using the MOF capable of selectively adsorbing carbon dioxide to collect carbon dioxide known as a greenhouse gas. By using the MOF capable of selectively adsorbing, for example, a hydrocarbon (methane, ethane, propane, or the like), hydrogen, hydrogen sulfide, nitrogen, or oxygen, in addition to carbon dioxide, the composite sheet according to this embodiment can be configured as a gas adsorption sheet for these gases.

In the composite sheet according to this embodiment, it is possible to achieve the effects of the present invention even in the case where any of wide variety of MOFs is used. That is, the MOF is synthesized by self-assembly mainly through a coordination bond between a metal ion and an organic ligand. This reaction mechanism is the same regardless of the types of metal ion and organic ligand. Since the MOF has, in principle, infinite combinations of metal ions and organic ligands, the combination of MOFs has infinite possibilities. At this time, the shape of the nano-space to be obtained can be arbitrarily tuned because the MOF can be synthesized by considering and selecting species of the metal ion, the shape, the length, and the substituent group of a ligand, and the like in accordance with the type of gas to be adsorbed and the adsorption characteristics. From the above, the present invention can achieve the same effect with an arbitrary MOF.

[Basic configuration of method of producing composite sheet]

(Schematic description)

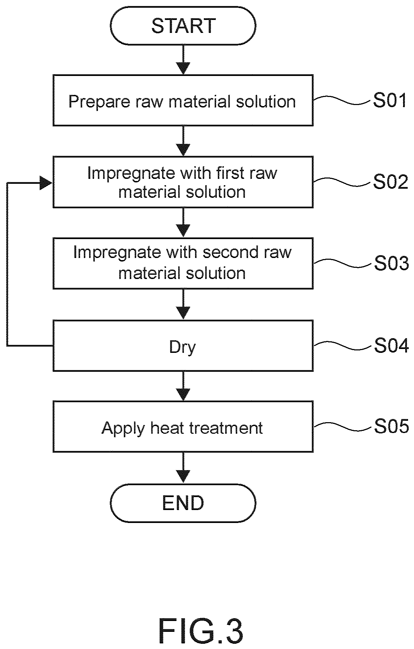

The basic configuration of a method of producing a composite sheet according to this embodiment will be described in accordance with the flowchart shown in Fig. 3. The method of producing a composite sheet according to Fig. 3 includes Step S01 (Prepare raw material solution), Step S02 (Impregnate with first raw material solution), Step S03 (Impregnate with second raw material solution), Step S04 (Dry), and Step S05 (Apply heat treatment). Hereinafter, Steps S01 to S05 according to this embodiment will be described.

(Step S01: Prepare raw material solution)

In Step S01, each of a first raw material solution and a second raw material solution is prepared as a raw material solution of a MOF. The first raw material solution and the second raw material solution are each a solution including either a metal ion or an organic ligand, which are raw materials of the MOF. When these solutions are mixed, the metal ion and the organic ligand react with each other to generate a MOF.

In order to increase the amount of MOFs produced to improve the production efficiency, the concentration of the metal ions and organic ligands in the first raw material solution and the second raw material solution is preferably 0.05 mol/L or more.

In order to ensure the smooth production of MOFs, the concentration of metal ions and organic ligands in the first raw material solution and the second raw material solution is preferably 10 mol/L or less.

In this embodiment, the first raw material solution includes a metal ion as a solute, and the second raw material solution includes an organic ligand as a solute.

In this embodiment, the solvent of the first raw material solution preferably includes water.

In this embodiment, the solvent of the second raw material solution preferably includes ethanol.

As an example of Step S01, in the case where the MOF is an ELM-11 (ELM = Elastic Layer-structured Metal organic framework), an aqueous solution of $Cu(BF_4)_2$ is prepared as a first raw material solution, and an ethanol solution of 4,4'-bipyridine (bpy) is prepared as a second raw material solution.

(Step S02: Impregnate with first raw material solution)

In Step S02, a sheet base material is impregnated with the first raw material solution prepared in Step S01.

The method of impregnating the sheet base material with the first raw material solution in Step S02 is not limited to a specific method. For example, a method of impregnating the sheet base material with a sufficient amount of the first raw material solution using one or two or more selected from dropping with a dropper, spraying, spray coating, die coating, curtain coating, and dip coating can be used. Of these, one or two or more selected from dropping with a dropper, spraying, spray coating, die coating, and curtain coating are preferably used from the viewpoint of preventing contamination in the first raw material solution.

In Step S02, the time for impregnating the sheet base material with the first raw material solution is preferably 0.01 minute or more, more preferably 0.05 minutes or more, and still more preferably 0.1 minute or more, from the viewpoint of allowing the first raw material solution to penetrate to the central region of the sheet base material.

Further, the time for impregnating the sheet base material with the first raw material solution is preferably 30 minutes or less, more preferably 15 minutes or less, and still more preferably 5 minutes or less, from the viewpoint of ensuring productivity.

Note that in this embodiment, the time for impregnating the sheet base material with the (first or second) raw material solution represents the total time of the time taken to impregnate the sheet base material with the raw material solution, such as dropping of the raw material solution with a dropper, and the time taken to allow the raw material solution to stand to penetrate the sheet base material.

In Step S02, it is preferable to uniformly disperse the metal ion included in the first raw material solution together with the solvent over the entire sheet base material.

(Step S03: Impregnate with second raw material solution)

In Step S03, the sheet base material that has been impregnated with the first raw material solution in Step S02 is impregnated with the second raw material solution prepared in Step S01 before the first raw material solution dries.

This allows the reaction between the solute of the first raw material solution and the solute of the second raw material solution to proceed smoothly even in the case where the solute of the first raw material solution is difficult to dissolve in the solute of the second raw material solution.

Further, even in the case where the solute of the first raw material solution is dissolved in the solute of the second raw material solution, it is possible to uniformly proceed the reaction between the solute of the first raw material solution and the solute of the second raw material solution.

The state in which the first raw material solution has not dried in the sheet base material is a state in which the solvent of the first raw material solution remains in the sheet base material, more specifically a state in which 50% or more of the solvent of the first raw material solution remains in the sheet base material as compared with that before the impregnation.

The method of impregnating the sheet base material with the second raw material solution in Step S03 is not limited to a specific method. For example, a method of impregnating the sheet base material with a sufficient amount of the second raw material solution using one or two or more selected from dropping with a dropper, spraying, spray coating, die coating, curtain coating, and dip coating can be used. Of these, one or two or more selected from dropping with a dropper, spraying, spray coating, die coating, and curtain coating are preferably used from the viewpoint of preventing contamination in the first raw material solution. The amount of the second raw material solution is preferably the amount corresponding to the amount of the first raw material solution with which the sheet base material is impregnated in Step S02.

In Step S03, the time for impregnating the sheet base material with the second raw material solution is preferably 0.01 minute or more, more preferably 0.05 minutes or more, and still more preferably 0.1 minute or more, from the viewpoint of allowing the second raw material solution to penetrate to the central region of the sheet base material.

Further, the time for impregnating the sheet base material with the second raw material solution is preferably 30 minutes or less, more preferably 15 minutes or less, and still more preferably 5 minutes or less, from the viewpoint of ensuring productivity.

In Step S03, it is preferable to uniformly disperse the organic ligand included in the second raw material solution together with the solvent over the entire sheet base material.

This organic ligand reacts with the metal ion that has been previously dispersed in the sheet base material in Step S02 to generate a MOF.

As an example of Step S03, in the case where MOF is ELM-11, $Cu(BF_4)_2$ contained in the first raw material solution and bpy contained in the second raw material solution react with each other by the following formula to generate ELM-11.

$$Cu(BF_4)_2 + 2bpy \rightarrow Cu(bpy)_2(BF_4)_2$$

In the general process of producing a composite sheet, a MOF generated in advance is supported on the sheet base material. For this reason, each particle of the MOF tends to stay on the surface layer portion in the vicinity of the surface of the sheet base material because it cannot penetrate the inside through gaps of the fiber forming the sheet base material. That is, in the general process of producing a composite sheet, the MOF tends to be unevenly distributed on the surface layer portion of the sheet base material. Conversely, with a base material configuration in which the MOF is capable of penetrating the inside of the sheet base material, the MOF drops off quickly and it is difficult to increase the amount of MOFs supported.

On the other hand, in the process of producing the composite sheet according to this embodiment, typically, raw materials before generating MOFs, i.e., a metal ion and an organic ligand, are dispersed into the sheet base material at the molecular level. By generating MOF particles after that, it is possible to cause not only the surface layer portion of the sheet base material but also the central region in the thickness direction to support a large number of MOFs.

Note that the "central region in the thickness direction" refers to the middle part when the sheet base material is equally divided into three regions in the thickness direction.

In the process of producing the composite sheet according to this embodiment, since the above advantage can be achieved even with a configuration in which the thickness of the sheet base material is large, it is possible to cause, using a sheet base material having a large thickness, the sheet base material to support even more MOFs. From this viewpoint, in this embodiment, the thickness of the composite sheet is preferably 0.2 mm or more, more preferably 0.5 mm or more, and still more preferably 1 mm or more.

The thickness of the composite sheet is realistically 10 mm or less, preferably 5 mm or less.

The thickness of the composite sheet is obtained as an average of a total of 5 positions, i.e., 4 corner positions and 1 central region in plan view, measured with a weight of 3.7 gf/cm$^2$ and the area of the pressure surface of the probe of 10 cm$^2$ in accordance with JIS K 6402.

In the above general process of producing a composite sheet, the amount of MOF particles that wrap around to the region on the opposite side of the fiber on the spraying surface or application surface is small in the process of spraying or applying MOFs to the sheet base material. For this reason, it is difficult to support the MOFs uniformly over the entire circumference of the surface of the fiber.

On the other hand, in the process of producing the composite sheet according to this embodiment, it is possible to disperse the metal ion and the organic ligand together with the solvent over the entire three-dimensional structure of the sheet base material. For this reason, it is possible to support the MOFs uniformly over the entire circumference of the surface of the fiber forming the sheet base material.

As a comparative configuration example to this embodiment, a production process using a method of drying the sheet base material impregnated with the first raw material solution before Step S03 will be described. In the process of producing a composite sheet according to the comparative configuration example, the solvent is removed by evaporating from the surface layer side of the sheet base material in the process of drying the sheet base material before Step S03. For this reason, the solvent in the central region in the thickness direction of the sheet base material disperses to the surface layer side together with the metal ion and solidifies. As a result, in the process of producing the composite sheet according to the comparative configuration example, the solute of the first raw material solution is unevenly distributed on the surface layer portion in the sheet base material before being impregnated with the second raw material solution. For this reason, the amount of MOFs that can be generated in the central region in the thickness direction of the sheet base material is small. Further, in the process of producing the composite sheet according to the comparative configuration example, the solute of the first raw material solution is generated as a solid in the sheet base material before being impregnated with the second raw material solution. For this reason, even if the sheet base material is impregnated with the second raw material solution, it is difficult for the solute of the first raw material solution to dissolve in the solvent of the second raw material solution to form metal ions. As a result, metal ions do not react with the organic ligand and tend to remain as unreacted products.

In the process of producing the composite sheet according to this embodiment, it is preferable that the sheet base material impregnated with the first raw material solution in Step S02 is not dried and the sheet base material in a state in which the solvent of the first raw material solution is present is impregnated with the second raw material solution in Step S03.

This eliminates the above problem that occurs in the process of producing the composite sheet according to the comparative configuration example. That is, in the process of producing the composite sheet according to this embodiment, the metal ion included in the first raw material solution can be caused to react with the organic ligand included in the second raw material solution while being uniformly dispersed in the sheet base material.

Further, in the process of producing the composite sheet according to this embodiment, the metal ion and the organic ligand, that are present in the solvent without being subjected to binding force, efficiently bond to each other to proceed the reaction. For this reason, the metal ion and the organic ligand are unlikely to remain as unreacted products.

Therefore, in the process of producing the composite sheet according to this embodiment, it is possible that the sheet base material supports MOFs more than in the process of producing the composite sheet according to the comparative configuration example.

In the process of producing the composite sheet according to this embodiment, it is conceivable that the reaction between the metal ion and the organic ligand proceeds with heterogeneous nucleation at the interface of the fiber forming the sheet base material. Intermolecular forces act between the MOF generated with heterogeneous nucleation in this way and the interface of the fiber. The MOF generated in Step S03 is supported directly on the interface of the fiber by the intermolecular forces without any other component. Therefore, in the process of producing the composite sheet according to this embodiment, it is unnecessary to use a binder as an adhesive component to support the MOF on the surface of the fiber.

In the present specification, the phrase "the MOF is supported directly on the surface of the fiber" refers to that the MOF is fixed to the surface of the fiber without any other component other than the MOF and the fiber material. Typically, the MOF is fixed by intermolecular forces as described above, hydrophobic interactions described below, and/or the resin on the surface of the fiber, which is molten and fixed to the MOF.

As a result, in the composite sheet according to this embodiment, performance degradation due to the presence of binders, such as a decrease in gas adsorption performance of the MOF due to adhesion of the binder and a decrease in flexibility due to the binder, is less likely to occur. For this reason, in the composite sheet according to the present invention, it is preferable that the MOF is supported directly on the surface of the fiber. Such an effect is achieved mainly by generation of the MOF by the reaction between the metal ion and the organic ligand as described above and can be effectively achieved with not only the configuration exemplified in Examples described below but also other configurations.

In the composite sheet according to this embodiment, the distance between fibers defined as the dimension of the gap between fibers forming the sheet base material is preferably 1 $\mu$m or more, more preferably 10 $\mu$m or more, still more preferably 50 $\mu$m or more, and still more preferably 100 $\mu$m or more. This ensures structure flexibility of the MOF supported on the surface of the fiber and prevents the MOF from dropping off. That is, it is easier to achieve high flexibility of the composite sheet and it is possible to provide a space where the MOF is formed to increase the support ratio.

Further, the distance between fibers is preferably 1 000 $\mu$m or less, more preferably 500 $\mu$m or less, still more preferably 400 $\mu$m or less, and still more preferably 300 $\mu$m or less. This suppresses homogeneous nucleation and more effectively generates heterogeneous nucleation during the reaction between the metal ion and the organic ligand. That is, the portion where the MOF is formed can be controlled to be the surface of the fiber.

A method of measuring the distance between fibers of the sheet base material in the composite sheet according to this embodiment will be described. First, an arbitrary surface of the composite sheet to be measured is observed with a SEM to obtain an enlarged image of the surface. In the enlarged image, 50 gaps formed by the respective fibers are selected, and the total area of the gaps is measured and divided by the number of gaps (50) to obtain an average gap area per gap. An average fiber-to-fiber diameter when the gap is converted into a circle is obtained on the basis of the average gap area per gap obtained in this way using the following formula, and the average fiber-to-fiber diameter is used as the distance between fibers.

Average fiber-to-fiber diameter = 2 $\times$ (average gap area / 3.14)^(1/2)

Further, in the composite sheet according to this embodiment, the basis weight of the sheet base material is preferably 10 g/m$^2$ or more, more preferably 20g/m$^2$ or more, and preferably 100 g/m$^2$ or less, more preferably 80g/m$^2$ or less. Note that in the case where sheet base materials are stacked and used as one sheet base material, it is preferable that the total basis weight of the sheet base material exceeds 100 g/m$^2$.

(Step S04: Dry)

In Step S04, the sheet base material on which the MOF is supported in Step S03 is dried.

In Step S04, in the process of drying, the solvent is removed by evaporating from the surface layer side of the sheet base material, and the solvent in the central region in the thickness direction of the sheet base material disperse to the surface layer side. However, the MOF that has been fixed to the surface of the fiber in the central region in the thickness direction of the sheet base material stays on the surface of the fiber without moving together with the solvent. For this reason, in the method of producing a composite sheet according to this embodiment, the dispersed state of the MOF supported on the sheet base material in Step S04 is maintained.

In the method of producing a composite sheet according to the present invention, the total number of times to perform the series of processes of Step S02 to S04 may be one. That is, it does not necessarily need to repeat the series of processes.

Meanwhile, by repeating the processes of Steps S02 to S04, it is possible to increase the amount of MOFs to be supported on the sheet base material. From this viewpoint, the total number of times to perform the processes of Step S02 to S04 is preferably 2 or more, more preferably 3 or more.

Since there is a limit to the amount of MOFs that can be supported on the sheet base material, the total number of times to perform Step S02 to S04 is preferably 20 or less, more preferably 15 or less, and still more preferably 10 or less, in the method of producing a composite sheet according to this embodiment from the viewpoint of the production cost and the like.

(Step S05: Apply heat treatment)

In Step S05, heat treatment is applied to the sheet base material dried in Step S04. For example, the heat treatment in Step S05 can be performed by holding at 140°C for 2 hours.

Since the MOF generated in Step S03 is in a hydrated state, it does not have a gas adsorption function.

In Step S05, it is preferable that the solvent component remaining in the sheet base material is completely removed.

In Step S05, by dehydrating the MOF, it is possible to exhibit the gas adsorption function of the MOF. In this way, the composite sheet according to this embodiment is obtained.

[Another configuration example of method of producing composite sheet]

The method of producing a composite sheet according to this embodiment is not limited to the above basic configuration. For example, in the method of producing a composite sheet according to this embodiment, it is preferable that in Step S01, one of the metal ion and the organic ligand, which are raw materials of a MOF, is included in the first raw material solution, and the other is included in the second raw material solution.

In Step S01, it is preferable that the first raw material solution includes the metal ion and the second raw material solution includes the organic ligand as described above.

In addition to this, the first raw material solution may include the organic ligand and the second raw material solution may include the metal ion.

In the method of producing a composite sheet according to this embodiment, it is preferable that in Step S01, one of the first raw material solution and the second raw material solution includes water as a solvent, and the other includes an organic solvent as a solvent.

In Step S01, it is preferable that water is included as the solvent of the first raw material solution and an organic solvent is included as the solvent of the second raw material solution as described above.

In addition to this, an organic solvent may be included as the solvent of the first raw material solution and water may be included as the solvent of the second raw material solution.

Further, in Step S01, a solvent other than ethanol may be used as the organic solvent. For example, methanol, isopropanol, or acetone may be included.

The organic solvent is preferably one that can be mixed with water in arbitrary ratio.

In the method of producing a composite sheet according to this embodiment, it is preferable that in Step S01, the content of water included in one of the first raw material solution and the second raw material solution, which includes water as a solvent, is 30 mass% or more and 99 mass% or less. Further, in the method of producing a composite sheet according to this embodiment, it is preferable that in Step S01, the content of an organic solvent included in one of the first raw material solution and the second raw material solution, which includes the organic solvent as a solvent, is 30 mass% or more and 99 mass% or less. Within these numeral ranges, it is easier for the raw material solution to penetrate to the sheet base material and for MOFs to fix uniformly in the thickness direction of the composite sheet.

The method of producing a composite sheet according to this embodiment may include, as necessary, an additional Step in addition to the above Steps. Further, in the method of producing a composite sheet according to this embodiment, some of the above Steps may be changed or omitted as necessary.

For example, in the drying in Step S04, the treatment time can be shortened by performing the heat treatment at a temperature higher than room temperature and lower than the heat treatment temperature in Step S05. In this case, the drying in Step S04 and the heat treatment in Step S05 can be performed in a series of heating processes.

In the method of producing a composite sheet according to this embodiment, it is preferable to use a sheet base material that is at least partially formed of an organic fiber. As a result, in the method of producing a composite sheet according to this embodiment, hydrophobic interactions between molecules act between the organic ligand of the MOF and a group present on the surface of the organic fiber, which allows the MOF to be more firmly fixed to the surface of the organic fiber.

Such hydrophobic interactions appear not only in hydrophobic organic fibers but also in hydrophilic organic fibers. That is, hydrophobic interactions appear even in the organic fiber that is hydrophilic as a whole if it has a hydrophobic portion at a micro level. For example, in a cellulose fiber that is a hydrophilic organic fiber, hydrophobic interactions appear because a C-H group forming an axial group of the glucopyranose ring is hydrophobic.

Whether the fiber forming the sheet base material in the composite sheet is hydrophilic or hydrophobic is determined by the actual property of the surface of the fiber regardless of the original property of the fiber itself. That is, in the case of the fiber that has been subjected to surface treatment, the determination is made for the fiber in the state after the surface treatment. For example, the hydrophobic fiber whose surface has been subjected to hydrophilic treatment is determined to be a hydrophilic fiber, and the hydrophilic fiber whose surface has been subjected to hydrophobic treatment is determined to be a hydrophobic fiber.

To evaluate whether the fiber forming the sheet base material in the composite sheet is hydrophilic or hydrophobic, deionized water is sprayed on the composite sheet, and the contact surface between each fiber and deionized water is observed using a microscope or a digital microscope. It is determined that the surface of the fiber is hydrophilic in the case where the contact angle between the fiber and deionized water is less than 60°, and it is determined that the surface of the fiber is hydrophobic in the case where the contact angle is 60° or more.

In the method of producing a composite sheet according to this embodiment, it is preferable to use a sheet base material including both a hydrophilic fiber and a hydrophobic fiber. As a result, in Step S03, the penetration speed of one of water and the organic solvent into the sheet base material impregnated with the other increases, and thus, the MOFs are less likely to be unevenly distributed in the sheet base material.

The sheet base material according to this embodiment preferably includes, as a hydrophilic organic fiber, one or two or more selected from a cellulose fiber, a regenerated cellulose fiber, a thermoplastic fiber whose surface has been hydrophilized, and the like.

The regenerated cellulose fiber more preferably includes one or two or more selected from a rayon, a cupra, and the like.

Examples of the method of hydrophilizing the surface of the thermoplastic fiber include applying a hydrophilizing agent and performing plasma treatment.

The thermoplastic fiber preferably includes one or two or more selected from a polyolefin resin, a polyester resin, a vinyl resin, an acrylic resin, a fluoropolymer, a polyamide resin, and the like.

The polyolefin resin preferably includes one or two or more selected from polyethylene, polypropylene, and the like.

The polyester resin preferably includes one or two or more selected from polyethylene terephthalate and the like.

The vinyl resin preferably includes one or two or more selected from polyvinyl chloride, polystyrene, and the like.

The acrylic resin preferably includes one or two or more selected from polyacrylic acid, polymethylmethacrylate, and the like.

The fluoropolymer preferably includes one or two or more selected from polyperfluoroethylene and the like.

Further, the sheet base material according to this embodiment preferably includes, as a hydrophobic organic fiber, one or two or more selected from a synthetic fiber and the like.

The synthetic fiber preferably includes one or two or more selected from a polyolefin fiber, a polyester fiber, a fluorine fiber, a polyamide fiber, and the like.

Further, in this embodiment, part or all of the fiber forming the sheet base material may be an inorganic fiber. The sheet base material according to this embodiment preferably includes, as an inorganic fiber, one or two or more selected from a glass fiber, a ceramic fiber, a metal fiber, a carbon fiber, and the like.

In the method of producing a composite sheet according to this embodiment, a core-sheath fiber may be used as an organic fiber forming the sheet base material. The core-sheath fiber is a composite fiber in which a resin that forms a core and a resin that forms a sheath are different from each other, the sheath covering the core and forming a surface of the fiber.

In the core-sheath fiber used in this embodiment, the melting point of the core is preferably higher than the melting point of the sheath, and the melting point of the core is higher than the melting point of the sheath by preferably 20°C or more.

Further, in the core-sheath fiber used in this embodiment, the melting point of the core is preferably 160°C or more, and the melting point of the sheath is preferably 80°C or more. Further, in the core-sheath fiber, it is preferable that the melting point of the core is higher than the heat treatment temperature in Step S05. Further, in the core-sheath fiber, it is preferable that the melting point of the sheath is higher than the drying temperature in Step S04 and lower than the heat treatment temperature in Step S05.

By setting the melting point of the sheath of the core-sheath fiber to be higher than the drying temperature in Step S04, it is possible to prevent the rection product of the sheath molten in Step S04 from being taken in the fiber. For this reason, it is possible to firmly proceed the reaction of generating MOFs and increase the reactivity of the reaction of generating MOFs. Further, by setting the melting point of the sheath of the core-sheath fiber to be lower than the heat treatment temperature in Step S05, it is possible to more reliably fix the MOF to the surface of the fiber. Further, by setting the melting point of the core of the core-sheath fiber to be higher than the heat treatment temperature in Step S05, the fiber shape is maintained by the core that does not melt in Step S05. For this reason, the gaps between the fibers of the sheet base material are maintained, and it is possible to increase the reactivity of the reaction of generating MOFs. That is, with such a configuration, in the method of producing a composite sheet according to this embodiment, the form of the fiber is maintained by the core having a high melting point in the heat treatment in Step S05. Further, the resin of the sheath having a low melting point is molten and fixed to the MOF, which allows the MOF to be fixed. As a result, in the method of producing a composite sheet according to this embodiment, it is possible to more firmly fix the MOF to the surface of the fiber including the sheath.

The fiber forming the sheet base material in this embodiment preferably includes, for example, a core-sheath fiber that includes a core formed of polyethylene terephthalate and a sheath formed of polyethylene.

[Detailed configuration of composite sheet]

(Surface coverage)

In the composite sheet according to this embodiment, the MOF can be supported on the entire three-dimensional structure of the sheet base material including the fiber in Step S03. That is, in the composite sheet according to this embodiment, a large number of MOFs can be supported on not only the surface layer portion of the sheet base material but also the central region in the thickness direction. Specifically, in the composite sheet according to this embodiment, the surface coverage defined as the ratio of the region covered by the MOF on the surface of the fiber in the central region in the thickness direction of the composite sheet is preferably 60% or more, more preferably 70% or more, still more preferably 80% or more, and realistically 100% or less.

The surface coverage by the MOF in the fiber forming the sheet base material of the composite sheet can be obtained using SEM and energy-dispersive X-ray spectroscopy (EDX). Specifically, the composite sheet is split, and unsupported MOFs are removed by a blower or the like. A microstructure photograph of the entire split surface is taken by SEM. In the obtained microstructure photograph, a perpendicular line to a straight line along the width direction of the composite sheet is drawn, and the midpoint between both end portions in the thickness direction of the composite sheet is determined on the perpendicular line. The portion on the straight line along the width direction passing through the midpoint is defined as the central region in the thickness direction of the composite sheet. Attention is paid on one arbitrary fiber present in the central region in the thickness direction of the composite sheet, a microstructure photograph of the one fiber is taken by SEM, and an element mapping image is generated by EDX. As a result, a region where the fiber is present can be identified by the microstructure photograph, and a region where metal is present can be identified as a region where a MOF is present by the element mapping image. The surface coverage can be calculated as a ratio of the region where a MOF is present to the entire region where a fiber is present.

(Circumferential coverage)

In the composite sheet according to this embodiment, the MOF can be supported uniformly on the entire circumference of the surface of the fiber forming the sheet base material. As a result, in the composite sheet according to this embodiment, it is possible to increase the circumferential coverage defined as the ratio of the region covered by the MOF, of the surface of the fiber observed as the contour of the fiber in the cross section orthogonal to the longitudinal direction of the fiber forming the sheet base material. Specifically, in the composite sheet according to this embodiment, the circumferential coverage by the MOF in at least part of the fiber forming the sheet base material is preferably 80% or more, more preferably 85% or more, still more preferably 90% or more, and realistically 100% or less. Still more preferably, the circumferential coverage by the MOF in at least part of the fiber forming the middle region when the cross section of the composite sheet is equally divided into three regions in the thickness direction is 80% or more. The shape of the contour of the fiber is not particularly limited, and may be circular, rectangular, triangular, star-shaped, or the like. In any case, the circumferential coverage can be calculated by obtaining the length of the entire circumference of the surface of the fiber using a known method.

The circumferential coverage by the MOF on the surface of the fiber forming the sheet base material of the composite sheet can be obtained using SEM and EDX. Specifically, a microstructure photograph in the field of view in which the cross section orthogonal to the longitudinal direction of the fiber in the cross section of the composite sheet can be observed is taken by SEM, and an element mapping image is generated by EDX. The length of the entire region of the surface of the fiber observed as the contour of the fiber in the cross section orthogonal to the longitudinal direction of the fiber and the length of the region covered by the MOF of the surface of the fiber observed as the contour of the fiber are measured, and the circumferential coverage can be used as the ratio thereof by the following formula.

Circumferential coverage (%) by MOF = 100 × (length of region covered by MOF of surface of fiber / length of entire region of surface of fiber)

(Thickness of MOF layer covering fiber)

Whether or not the MOF covers the surface of the fiber and the thickness of the MOF layer covering the fiber are determined and measured as follows. A two-component curable liquid epoxy resin and a curing agent are mixed, and a sheet to be measured is impregnated with the mixture. After that, the obtained mixture is degassed by vacuuming and then subjected to heat treatment to cure the epoxy resin and the curing agent. In this way, a cured sample with the positions of the fiber and the MOF fixed is obtained.

The obtained cured sample is cut along the thickness direction of the sheet, and the surface thereof is observed by SEM. A cross-sectional portion of the fiber covered by the MOF is extracted from the obtained cross-sectional image of the composite sheet. An average value of the thicknesses in the fiber radial direction of the MOF layer of the portion covering the fiber is used as the thickness of the MOF layer.

(Content ratio of MOF)

In the composite sheet according to this embodiment, by increasing the surface coverage and the circumferential coverage by the MOF in the fiber forming the sheet base material as described above, it is possible to support more MOFs on the sheet base material, i.e., increase the content of MOFs. Specifically, in the composite sheet according to this embodiment, the content ratio of the MOF defined as the ratio of the mass of the MOF to the mass of the entire composite sheet after the heat treatment is preferably 80 mass% or more, more preferably 85 mass% or more. Further, in the composite sheet according to this embodiment, the content ratio of the MOF is preferably 99 mass% or less.

The content ratio of the MOF in the composite sheet can be obtained by analyzing the composite sheet. Specifically, first, gas adsorption measurement, X-ray diffraction (XRD), EDX, nuclear magnetic resonance (NMR), infrared spectroscopy (IR), elemental analysis, and the like are performed to obtain a pore structure, a crystal lattice size, a crystal structure, and a constituent element. The type of MOF, i.e., the metal ion and the organic ligand are identified by checking these results against a publicly available database of MOFs. The composite sheet is then thermally decomposed, and the amount of metal included in the remaining ash is measured. Next, the mass of the MOF included in the composite sheet is obtained on the basis of the measured amount of metal and the content of metal in the identified MOF. The content ratio of the MOF is obtained by dividing the obtained mass of the MOF by the mass of the composite sheet.

(Surface exposure ratio of MOF)

In the composite sheet according to this embodiment, it is unnecessary to rely on mainly a binder as an adhesive component. For this reason, in the composite sheet according to this embodiment, it is possible to increase the surface exposure ratio without causing a binder to cover the surface of the MOF. The surface exposure ratio is defined as the ratio of the area of the region where the surface of the MOF is exposed to the area of the region occupied by the MOF supported on the fiber forming the sheet base material when the composite sheet is viewed in plan ($100 \times$ (area of the region where the surface of the MOF is exposed) / (area of the region occupied by the MOF supported on the sheath of the core-sheath fiber forming the sheet base material)). Specifically, in the composite sheet according to this embodiment, the surface exposure ratio of the MOF is preferably 50% or more and 100% or less, more preferably 70% or more, and still more preferably 90% or more.

In order to measure the surface exposure ratio of the MOF in the composite sheet, first, MOFs that are not supported on the fiber forming the sheet base material in the composite sheet are removed by a blower or the like. Subsequently, the surface of the MOF supported on the fiber forming the sheet base material is analyzed using time-of-flight secondary ion mass spectrometry (TOF-SIMS), micro IR, or the like and can be evaluated by mapping. Specifically, a portion of the MOF to be observed is identified, the area thereof (area of the region occupied by the MOF) is measured, and the surface of the MOF is analyzed. The area of the region where a spectrum derived from a substance other than MOF is detected on the MOF is measured by analyzing the surface of the MOF. The substance other than the MOF is derived from, for example, a binder. The area of the region where a spectrum derived from a substance other than MOF is detected is subtracted from the area of the region occupied by the MOF. The area of the difference is divided by the surface area of the MOF, and thus, the surface exposure ratio of the MOF can be calculated.

(Gas adsorption amount per unit volume of composite sheet)

Similarly, in the composite sheet according to this embodiment, the surface of the MOF is not covered by adhesion of a binder. For this reason, the surface exposure ratio of the MOF is high. In addition, in the composite sheet according to this embodiment, there are few unreacted products of the MOF as described by comparison with the comparative configuration example in the above "Step S03: Impregnate with second raw material solution". For this reason, the gas adsorption performance is less inhibited. As a result, in the composite sheet according to this embodiment, the MOF supported on the sheet base material is capable of effectively exhibiting the original gas adsorption performance. Further, it is possible to fix the MOF also to the fiber in the central region of the composite sheet, and the air permeability is high. For this reason, in the composite sheet according to this embodiment, it is possible to increase the gas adsorption amount per unit volume of the composite sheet.

Specifically, in the composite sheet according to this embodiment, for example, in the case of using ELM-11 as a MOF selectively adsorbing carbon dioxide, the gas adsorption amount per unit volume of the composite sheet is preferably 2 $mL/cm^3$ or more, more preferably 3 $mL/cm^3$ or more, and still more preferably 5 $mL/cm^3$ or more.

Further, for example, in the case of using ZIF-8 as a MOF selectively adsorbing carbon dioxide, the gas adsorption amount per unit volume of the composite sheet is preferably 0.5 $mL/cm^3$ or more, more preferably 0.7 $mL/cm^3$ or more, and still more preferably 1.0 $mL/cm^3$ or more.

The gas adsorption amount per unit volume of the composite sheet is obtained by dividing the gas adsorption amount measured for the composite sheet by the area of the measured composite sheet. The gas adsorption amount is measured using a high accuracy gas adsorption amount measurement instrument "BELSORP-miniII" manufactured by MicrotracBEL Corp.

(Dropout ratio of MOF)

In the composite sheet according to this embodiment, it is possible to firmly fix the MOF to the surface of the fiber without relying on mainly a binder as an adhesive component for foxing the MOF to the surface of the fiber. In the composite sheet according to this embodiment, the dropout ratio of the MOF by shaking evaluation in which the composite sheet is grabbed by hand and shaken up and down is preferably 0 mass% or more and 20 mass% or less, more preferably 18 mass% or less, still more preferably 15 mass% or less, and still more preferably 9 mass% or less.

As a result, in the composite sheet according to this embodiment, since the amount of the MOF supported on the sheet base material is easily maintained during transportation and use, the gas adsorption performance is less likely to deteriorate. Further, in the composite sheet according to this embodiment, it is possible to prevent the MOF that had dropped off during use from entering the facility as a foreign substance.

The dropout ratio of the MOF is obtained by dividing the mass of the MOF that has dropped off in shaking evaluation by the mass of the MOF included in the composite sheet before the shaking evaluation.

(Maximum bending stress of composite sheet)

In the composite sheet according to this embodiment, high flexibility can be easily achieved with the configuration that does not rely on mainly a binder as an adhesive component for fixing the MOF to the surface of the fiber. As a result, the composite sheet according to this embodiment can achieve high workability and can be preserved and transported in a rolled form.

In the composite sheet according to this embodiment, the maximum bending stress is preferably 0 MPa or more and 5 MPa or less, more preferably 3 MPa or less, still more preferably 1 MPa or less, and still more preferably 0.1 MPa or less.

The maximum bending stress in the composite sheet can be measured using a measuring apparatus (universal testing machine AG-X plus manufactured by SHIMADZU CORPORATION) in accordance with the three-point bending test of JIS K7017. At this time, the composite sheet used as a measurement sample is cut as a sample with the dimension of 100 mm (length) × 100 mm (width) and measured.

In the three-point bending evaluation, the sample is placed on a jig with a distance between fulcrums of 40 mm, the central portion between the fulcrums is pressed at a speed of 10 mm/min, and the amount of pressing and the bending load are measured. The maximum value of the bending stress obtained by this evaluation is used as the maximum bending stress.

The bending stress is a physical property value calculated by dividing the moment (product of a load and a distance) applied to the sample during the three-point bending test by the section modulus of the sample and is calculated by the following formula.

Bending stress (MPa) = 3 × bending load (N) × distance between fulcrums (m) / 2 / sample thickness (m) / (sample width $(m)^2$) / $10^6$

In the case where the sample cannot be cut out due to the dimension of the composite sheet to be measured, a sample having an arbitrary dimension may be cut out and measured.

(Gurley air permeability of composite sheet)

it is preferable that the composite sheet according to this embodiment is configured to allow gas to pass therethrough with low pressure loss such that gas is easily supplied also to the MOF supported on the central region in the thickness direction of the composite sheet. Specifically, in the composite sheet according to this embodiment, the Gurley air permeability is preferably 0 sec/100 mL or more and 10 sec/100 mL or less, more preferably 5 sec/100 mL or less, and still more preferably 0.5 sec/100 mL or less. The Gurley air permeability of the composite sheet can be obtained using a Gurley type air permeability tester in accordance with JIS P8117:2009.

(Identification of type of fiber forming sheet base material)

The type of fiber forming the sheet base material in the composite sheet can be identified using TOF-SIMS, IR, NMR, EDX, differential scanning calorimetry (DSC), and the like. Specifically, the type of fiber can be identified by identifying the structural formula of the fiber forming the sheet base material in the composite sheet using TOF-SIMS, IR, NMR, EDX, or the like and measuring the melting point thereof by DSC.

[Other embodiments]

Although an embodiment of the present invention has been described above, the present invention is not limited to only the above-mentioned embodiment, and it goes without saying that various modifications can be made without departing from the essence of the present invention.

For example, in the method of producing a composite sheet according to this embodiment, although it is preferable that one of solvents used in the first raw material solution and the second raw material solution prepared in Step S01 includes water and the other includes an organic solvent from the viewpoint of the penetration speed of the first raw material solution and the second raw material solution to the sheet base material, a configuration different from this may be adopted from another viewpoint. For example, in the method of producing a composite sheet according to this embodiment, both the solvents used in the first raw material solution and the second raw material solution prepared in Step S01 may include water or an organic solvent.

Although it is preferable that the composite sheet according to this embodiment does not include a binder, it may include a small amount of binder in the case where, for example, it is necessary to even more firmly fix the MOF to the sheet base material. However, in the composite sheet according to this embodiment, it is preferable that the ratio of the mass of the binder to the total mass of the MOF and the binder is 0 mass% or more and 5 mass% or less from the viewpoint of ensuring high gas adsorption performance of the MOF and high flexibility.

Further, in the composite sheet according to this embodiment, the content of the binder to the mass of the entire composite sheet is 0 mass% or more and 10 mass% or less, preferably 5 mass% or less, and more preferably 1 mass% or less.

[Examples and Comparative Examples]

(Examples 1 to 10)

As Examples of the present invention, samples of composite sheets were prepared using the above production method.

In Examples 1 to 6 and 8 to 10, as a sheet base material, an air laid non-woven fabric including a hydrophilic fiber and a hydrophobic fiber in the mass ratio shown in Table 1 was used. Softwood chemical pulp (NBKP) that was a cellulose fiber was used as a hydrophilic organic fiber. Further, as a hydrophobic organic fiber, a core-sheath fiber in which a core was formed of polyethylene terephthalate (PET) having a melting point of 260°C and a sheath was formed of polyethylene (PE) having a melting point of 130°C was used.

In Example 7, a non-woven fabric (manufactured by Asahi Kasei Corporation, a product name "Bemliese", a basis weight of 40 g/m$^2$) formed of a regenerated cellulose fiber was used as a sheet base material.

In all Examples 1 to 7, as a MOF, ELM-11 configured to be capable of selectively adsorbing carbon dioxide was used. In all Examples 8 to 10, as a MOF, ZIF-8 configured to be capable of selectively adsorbing carbon dioxide was used.

Table 1 shows the thickness of the composite sheet, the basis weight of the sheet base material, the concentration of the first raw material solution and the second raw material solution prepared in Step S01, the number of times to perform Steps S02 to S04, the application amount of the first raw material solution in Step S02, the application amount of the second raw material solution in Step S03, the heat treatment temperature in Step S05, and the average distance between fibers, for each of the Examples 1 to 10.

The specific configurations of Steps S01 to S05 are as follows.

As Step S01 in Examples 1 to 7, a $Cu(BF_4)_2$ aqueous solution was diluted with deionized water to have the concentration shown in Table 1 to prepare a first raw material solution. Further, bpy was dissolved with ethanol to have the concentration shown in Table 1 to prepare a second raw material solution.

As Step S01 in Examples 8 to 10, a 2-methylimidazole aqueous solution was diluted with deionized water to be 3.46 mol/L to prepare a first raw material solution. Further, a zinc nitrate aqueous solution was dissolved with deionized water to be 0.77 mol/L to prepare a second raw material solution.

As Step S02 in Examples 1 to 10, 14 g of the first raw material solution was applied to the sheet base material of $100 \times 100$ mm using a dropper to obtain the application amount shown Table 1. In all Examples, the time for impregnating the sheet base material with the first raw material solution was approximately 2 minutes and the first raw material solution could be caused to sufficiently penetrate the sheet base material.

As Step S03 in Examples 1 to 10, 2.4 g of the second raw material solution was applied to the sheet base material to which the first raw material solution had been applied in Step S02 using a dropper to obtain the application amount shown in Table 1 before the sheet base material dries. In all Examples, the time for impregnating the sheet base material with the second raw material solution was approximately 2 minutes and the second raw material solution could be caused to sufficiently penetrate the sheet base material.

As Step S04 in Examples 1 to 10, the sheet base material to which the second raw material solution had been applied in Step S03 was dried by draft overnight.

Steps S02 to S04 were repeated the number of times shown in Table 1.

As Step S05, after repeating Steps S02 to S04 the number of times shown in Table 1, the sheet was placed in a drying furnace for two hours at the heat treatment temperature shown in Table 1.

In all Examples, the fibers in the sheet maintained their original forms. Further, MOFs were supported directly on the surface of the fiber and a MOF layer was formed on the surface of the fiber.

For the samples of the composite sheets according to Examples 1 to 10, the content ratio of the MOF, the surface coverage, the circumferential coverage, the surface exposure ratio, the thickness of the MOF layer, fiber diameter, and the gas adsorption amount per unit volume were measured using the above analysis method. The surface coverage and the circumferential coverage were obtained for the fiber forming the central region in the thickness direction of the composite sheet. The thickness of the MOF layer and the fiber diameter were obtained in the fiber on which the MOF was supported in a layer shape. In more detail, the content ratio of the MOF, the gas adsorption amount per unit volume, the gas adsorption amount per unit weight, and the gas adsorption amount per unit weight of the MOF were obtained as follows.

·Content ratio of MOF

The content ratio of the MOF was calculated on the basis of the mass of the obtained composite sheet and the mass of the base material sheet alone before supporting the MOF using the following formula.

Content ratio of MOF (%) = 100 $\times$ (mass of composite sheet - mass of base material sheet alone) / mass of sample

·Gas adsorption amount per unit volume

The sample of the composite sheet was cut into an arbitrary size. BELSORP-miniII (manufactured by MicrotracBEL Corp.) was used to evaluate the gas adsorption amount. Vacuum degassing treatment was performed at 100°C for 12 hours as pre-processing, and then, the adsorption isotherm of carbon dioxide was measured. The resulting adsorption amount as the adsorption amount of carbon dioxide was divided by the area of the measured sample of the composite sheet to calculate the gas adsorption amount per unit volume.

·Gas adsorption amount per unit weight

The sample of the composite sheet was cut into an arbitrary size. BELSORP-miniII (manufactured by MicrotracBEL Corp.) was used to evaluate the gas adsorption amount. Vacuum degassing treatment was performed at 100°C for 12 hours as pre-processing, and then, the adsorption isotherm of carbon dioxide was measured. The resulting adsorption amount was used as the adsorption amount of carbon dioxide. This adsorption amount of carbon dioxide was divided by the weight of the measured sample of the composite sheet to calculate the gas adsorption amount per unit volume.

·Gas adsorption amount per unit weight of MOF

The adsorption amount of carbon dioxide obtained in the same way as that for the gas adsorption amount per unit weight was divided by the mass of MOF contained in the measured composite sheet to calculate the gas adsorption amount per unit volume.

Table 2 shows the analysis results of the samples of the composite sheets according to Examples 1 to 10. In all samples, the surface coverage was 60% or more and the circumferential coverage was 80% or more. As a result, all samples had the high content ratio of the MOF of 80 mass% or more. Further, in all samples, the surface exposure ratio of the MOF was 100%. In all samples, the gas adsorption amount per unit volume of the composite sheet, the gas adsorption amount per unit weight, and the gas adsorption amount per unit weight the MOF showed high values. Therefore, it was presumed that a decrease in the gas adsorption performance of the MOF due to supporting by the sheet base material was suppressed.

Next, for the samples of the composite sheets according to Examples 1 to 10, the dropout ratio of the MOF, the maximum bending stress, the uniformity of the MOF, the workability, and Gurley air permeability in each sample were evaluated. For the workability, filling property evaluation and MOF retention evaluation were performed. In more detail, the uniformity of the MOF and the workability were evaluated as follows.

·Uniformity of MOF

The sample of the composite sheet was cut along the thickness direction to create a cross-sectional observation surface. After that, a microstructure photograph by SEM and an element mapping image by EDX were generated. At this time, respective regions obtained by dividing the sample of the composite sheet into three in the thickness direction were made to fall in the observation/analysis region. The content of metal that is the main component of the MOF was quantified from the obtained element mapping image, and an average value of the contents of the metal that is the main component of the MOF in the three divided regions and an evaluation value of the uniformity were calculated by the following formula.

Evaluation value of uniformity (%) = 100 × (maximum value of the content of the metal that is the main component of the MOF - minimum value of the content of the metal that is the main component of the MOF) / average value of the contents of the metal that is the main component of the MOF in the three divided regions

The numerical value obtained by rounding off the evaluation value of the uniformity obtained above to the nearest 10 was used as the evaluation result of the uniformity of the MOF. That is, it can be seen that in the sample of each composite sheet, the smaller the numerical value of the evaluation result is, the higher the uniformity of the MOF is, and the larger the numerical value of the evaluation result is, the lower the uniformity of the MOF is.

·Workability

As evaluation of workability, filling property evaluation and MOF retention evaluation were performed.

(1) Filling property evaluation

The composite sheet was cut into a width of 5 cm and a length of 10 cm, and the cut sample was wound around a cylinder having a diameter of 1.5 mm along the outer periphery of the circumference.
The stacked state of the obtained wound sample was checked and the state of the gaps of the stacked sample of composite sheet was checked. For the sample of each composite sheet, the maximum value of the gaps was used as the evaluation result of filling property. That is, it can be seen that in the sample of each composite sheet, the smaller the value of the evaluation result is, the higher the obtained filling property of the wound sample is.

(2) MOF retention evaluation

The mass of the composite sheet was measured before and after the filling property evaluation test, and the MOF retention ratio was calculated by the following formula.

MOF retention ratio (%) = 100 × (mass of the composite sheet after the filling property evaluation test / mass of the composite sheet before the filling property evaluation test)

This MOF retention ratio was used as the evaluation result of MOF retention evaluation. That is, it can be seen that in the sample of each composite sheet, the larger the value of the evaluation result, the better the state in which the MOF is supported on the surface of the fiber when being processed into a wound sample is maintained.
As shown in Table 2, in all samples of the composite sheets according to Examples 1 to 10, the dropout ratio of the MOF was small, i.e., 20 mass% or less, and the maximum bending stress was small, i.e., 3.3 MPa or less. As a result, in all samples, preferable evaluation results for workability were obtained, i.e., the gap in the filling property evaluation was less than 2 mm and the MOF retention evaluation was 94% or more. Further, in all samples, the numerical value of the uniformity of the MOF was 30% or less, and it was found that the MOF was dispersed with high uniformity over the entire sheet base material. In addition, in all samples, the Gurley air permeability was small, i.e., 0.2 sec/100 mL, and it was found that high air permeability could be achieved. It is conceivable that the high air permeability in each sample contributes to the increase in the gas adsorption amount per unit volume.
In all Examples 1 to 7, the gas adsorption amount per unit volume, the gas adsorption amount per unit weight, and the gas adsorption amount per unit weight of the MOF were larger than those in the following Comparative Examples 1 to 3 in which ELM-11 was used as a MOF similarly. Further, in all Examples 1 to 7, the maximum bending stress and the gap in the filling property evaluation for workability were smaller than those in the following Comparative Examples 1 to 3. This is presumably because flexibility is ensured due to the absence of binder. Further, it was found that in all Examples 1 to 7, the numerical value of the uniformity of the MOF was smaller and the MOF was more uniformly dispersed as compared with the following Comparative Examples 1 to 3. This is presumably because the MOF was uniformly disposed on the entire sheet base material by forming MOF particles on the sheet base material.

In all Examples 1 to 7, the uniformity of the MOF was higher and the gas adsorption amount per unit volume, the gas adsorption amount per unit weight, and the gas adsorption amount per unit weight of the MOF were larger than those in the following Comparative Example 4 in which ELM-11 was used as a MOF similarly. It is conceivable that the evaluation results of the uniformity of the MOF and the gas absorption properties in the samples according to Examples 1 to 7 in comparison with Comparative Example 4 could be obtained as follows. That is, it is conceivable that the solids of the raw material solutions did not move to the surface of the base material sheet during drying because the first raw material solution or the second raw material solution was not dried after impregnating the base material sheet was impregnated therewith. In addition, it is conceivable that the reaction to form a MOF progressed smoothly without hindering the metal ionization due to the solidification of the solute by drying in the first raw material solution or the second raw material solution.

In all Examples 1 to 7, the gas adsorption amount per unit volume, the gas adsorption amount per unit weight, and the gas adsorption amount per unit weight of the MOF were larger than those in the following Comparative Example 5 in which ELM-11 was used as a MOF similarly. This is presumably because the MOF could exhibit the original gas adsorption function without being covered by a resin. Further, in all Examples 1 to 7, the maximum bending stress was smaller, the gap in the filling property evaluation was smaller, and the Gurley air permeability was smaller than those in the following Comparative Example 5. These are presumably because they were not adversely affected by the melting of the resin.

In all Examples 8 to 10, the gas adsorption amount per unit volume and the gas adsorption amount per unit weight were larger than those in the following Comparative Example 6 in which ZIF-8 was used as a MOF similarly. This is presumably because in all Examples 8 to 10, the content ratio of the MOF was 80% or more and thus, more preferable gas adsorption performance could be achieved in each sample.

(Table 1)

| | | Example | | | | | | | | | |
|---|---|---|---|---|---|---|---|---|---|---|---|
| | | 1 | 2 | 3 | 4 | 5 | 6 | 7 | 8 | 9 | 10 |
| MOF type | | ELM | ELM | ELM | ELM | ELM | ELM | ELM | ZIF-8 | ZIF-8 | ZIF-8 |
| Fiber | Hydrophilic fiber (mass%) | 30 | 30 | 30 | 30 | 70 | 30 | 100 | 100 | 30 | 70 |
| | Hydrophobic fiber (mass%) | 70 | 70 | 70 | 70 | 30 | 70 | 0 | 0 | 70 | 30 |
| Thickness of composite sheet (mm) | | 1.5 | 1.5 | 3.0 | 1.5 | 1.0 | 1.5 | 0.4 | 0.4 | 1.1 | 1.1 |
| Basis weight of sheet base material (c/m$^2$) | | 40 | 40 | 80 | 40 | 40 | 40 | 40 | 40 | 30 | 40 |
| Concentration of first raw material solution (mol/L) | | 0.125 | 0.125 | 0.125 | 0.125 | 0.125 | 0.125 | 0.375 | 3.46 | 3.46 | 3.46 |
| Concentration of second raw material solution (mol/L) | | 1 | 1 | 1 | 1 | 1 | 1 | 3 | 0.77 | 0.77 | 0.77 |
| Steps S02 to S04 (times) | | 3 | 5 | 5 | 2 | 5 | 5 | 3 | 3 | 3 | 3 |
| Application amount of first raw material solution (mL) | | 14 | 13.6 | 26.9 | 13.5 | 9.9 | 13.9 | 3.9 | 3.2 | 6.8 | 5 |
| Application amount of second raw material solution (mL) | | 2.4 | 2.4 | 5 | 2.4 | 1.8 | 2.7 | 0.93 | 1.2 | 2.6 | 1.9 |
| Heat treatment temperature (°C) | | 140 | 140 | 140 | 140 | 140 | 110 | 60 | 65 | 65 | 65 |

(continued)

| | Example | | | | | | | | | |
|---|---|---|---|---|---|---|---|---|---|---|
| | 1 | 2 | 3 | 4 | 5 | 6 | 7 | 8 | 9 | 10 |
| Average distance between fibers ($\mu$m) | 160 | 160 | 160 | 160 | 160 | 160 | 5 | 5 | 160 | 160 |

(Table 2)

| | | Example | | | | | | | | | |
|---|---|---|---|---|---|---|---|---|---|---|---|
| | | 1 | 2 | 3 | 4 | 5 | 6 | 7 | 8 | 9 | 10 |
| MOF content ratio (mass%) | | 86 | 90 | 88 | 81 | 82 | 90 | 86 | 85 | 93 | 90 |
| Surface coverage (%) | | 80 | 90 | 90 | 65 | 75 | 90 | 100 | 100 | 80 | 100 |
| Circumferential coverage (%) | | 100 | 100 | 100 | 90 | 100 | 100 | 100 | 100 | 100 | 100 |
| MOF surface exposure ratio (%) | | 100 | 100 | 100 | 100 | 100 | 100 | 100 | 100 | 100 | 100 |
| Fiber | Thickness of MOF layer ($\mu$m) | 10 | 15 | 14 | 8 | 8 | 15 | 6 | 6 | 5 | 8 |
| | Fiber diameter ($\mu$m) | 23 | 23 | 23 | 23 | 23 | 23 | 6 | 6 | 23 | 23 |
| Gas adsorption amount (mL/cm$^3$) | | 6.2 | 9.7 | 9.4 | 1.5 | 3.9 | 7.1 | 19.3 | 1.6 | 1.4 | 1.3 |
| Gas adsorption amount (mL/g-sample) | | 31.1 | 34.7 | 38.4 | 12.9 | 17.6 | 25.4 | 27.0 | 2.56 | 3.52 | 4.49 |
| Gas adsorption amount (mL/g-MOF) | | 36.2 | 38.5 | 43.6 | 15.9 | 21.4 | 28.2 | 31.4 | 3.02 | 3.75 | 5.22 |
| MOF dropout ratio (%) | | 4 | 10 | 17 | 4 | 18 | 18 | 2 | 0 | 0 | 1 |
| Maximum bending stress (MPa) | | 0.03 | 0.03 | 0.03 | 0.03 | 0.03 | 0.03 | 2.3 | 3.3 | 0.3 | 0.49 |
| MOF uniformity (%) | | 20 | 10 | 10 | 30 | 20 | 10 | 20 | 30 | 20 | 20 |
| Workability | Filling property evaluation (mm) | Less than 2 | Less than 2 | Less than 2 | Less than 2 | Less than 2 | Less than 2 | Less than 2 | Less than 2 | Less than 2 | Less than 2 |
| | MOF retention evaluation (%) | 98 | 97 | 95 | 98 | 94 | 94 | 97 | 99 | 100 | 100 |
| Gurley air permeability (sec/100 mL) | | 0.1 | 0.1 | 0.1 | 0.1 | 0.1 | 0.1 | 0.1 | 0.1 | 0.2 | 0.1 |

(Comparative Examples 1 to 6)

Next, samples of composite sheets according to Comparative Examples 1 to 6 were prepared under the conditions shown in Table 3. Further, for each sample, analysis and evaluation same with those in Examples 1 to 10 were performed. Table 4 shows the analysis result and the evaluation result of each sample. Comparative Examples 1 to 6 will be described below in detail. In Comparative Examples 1 to 5, ELM-11 was used as a MOF similarly to Examples 1 to 7. In Comparative Example 8, ZIF-8 was used as a MOF similarly to Examples 8 to 10.

·Comparative Examples 1 to 3

In Comparative Examples 1 to 3, a non-woven fabric same with that in Example 1 was used as a sheet base material.

In Comparative Examples 1 and 2, instead of Steps S02 to S04 according to the above embodiment, the sheet base material was impregnated with a binder solution (water-soluble binder: polyvinylalcohol (PVA), solid content of 20%). After that, MOF particles generated in advance (average particle size of 5 μm) were spread on both surfaces of the sheet base material such that the content ratio of the MOF shown in Table 4 was obtained. They were pressed at room temperature and then subjected to heat treatment at 100°C for 2 hours.

In Comparative Example 3, instead of Steps S02 to S04 according to the above embodiment, a paint of a MOF generated in advance was applied onto both surfaces of the sheet base material and then subjected to heat treatment at 100°C for 2 hours. The configuration of the paint of the MOF used in Comparative Example 3 is as follows.

Average particle size of MOF: 5 μm
Binder: water-soluble PVA
MOF/binder ratio: 1/1
Solvent: deionized water
Solid content: 20%

In all Comparative Examples 1 to 3, the fibers in the composite sheet maintained their forms.

In all samples of the composite sheets according to Comparative Examples 1 to 3, the MOF was not supported directly on the surface of the fiber. In all samples, the surface of the MOF was partially covered by melting of the sheath of the core-sheath fiber or contact with the binder.

·Comparative Example 4

In Comparative Example 4, a porous substrate in which glass fibers were fixed in a sheet shape using a binder as a sheet base material was used. Further, as in the process of producing the composite sheet according to the above comparative configuration example, the sheet base material impregnated with the first raw material solution in Step S02 was dried and then the sheet base material was impregnated with the second raw material solution in Step S03. The number of times to perform Steps S02 to S04 including the Step of drying the sheet base material between Steps S02 and S03 was three. In Comparative Example 4, the fibers in the composite sheet maintained their forms.

·Comparative Example 5

In Comparative Example 5, a non-woven fabric formed of PE fibers was used as a sheet base material. Instead of Steps S02 to S04 according to the above embodiment, MOF particles generated in advance (average particle size of 5 μm) were spread on both surfaces of the sheet base material.

The obtained sample was a sheet in which the PE fibers formed of only PE having a low melting point melted due to heat treatment and no longer maintained their forms and the MOF was covered with a polyethylene resin.

·Comparative Example 6

The sample according to Comparative Example 6 is different from the above embodiment in that the content ratio of the MOF is less than 80 mass%.

(Table 3)

| | | Comparative Example | | | | | |
|---|---|---|---|---|---|---|---|
| | | 1 | 2 | 3 | 4 | 5 | 6 |
| MOF type | | ELM | ELM | ELM | ELM | ELM | ZIF-8 |
| Fiber | Hydrophilic fiber (mass%) | 30 | 30 | 30 | 0 | 0 | 70 |
| | Hydrophobic fiber (mass%) | 70 | 70 | 70 | 100 | 100 | 30 |
| Thickness of composite sheet (mm) | | 1.5 | 3.0 | 1.5 | 0.4 | 1.4 | 1.1 |
| Basis weight of sheet base material (g/m$^2$) | | 40 | 40 | 40 | 30 | 40 | 40 |
| Concentration of first raw material solution (mol/L) | | - | - | - | 0.125 | - | 3.46 |

(continued)

|  | Comparative Example | | | | | |
|---|---|---|---|---|---|---|
|  | 1 | 2 | 3 | 4 | 5 | 6 |
| Concentration of second raw material solution (mol/L) | - | - | - | 1 | - | 0.77 |
| Steps S02 to S04 (times) | - | - | - | 3 | - | 1 |
| Application amount of first raw material solution (mL) | - | - | - | 1 | - | 4.2 |
| Application amount of second raw material solution (mL) | - | - | - | 0.8 | - | 1.7 |
| Heat treatment temperature (°C) | 100 | 100 | 100 | 140 | 140 | 65 |
| Average distance between fibers ($\mu$m) | 160 | 160 | 160 | 50 | 120 | 160 |

(Table 4)

|  | | Comparative Example | | | | | |
|---|---|---|---|---|---|---|---|
|  | | 1 | 2 | 3 | 4 | 5 | 6 |
| MOF content ratio (mass%) | | 90 | 72 | 48 | 77 | 90 | 69 |
| Surface coverage (%) | | 30 | 20 | 50 | 60 | - | 100 |
| Circumferential coverage (%) | | 30 | 20 | 20 | 50 | - | 100 |
| MOF surface exposure ratio (%) | | 30 | 20 | 0 | 100 | - | 100 |
| Fiber | Thickness of MOF layer ($\mu$m) | 5 | 3 | 3 | 5 | - | 5 |
| | Fiber diameter ($\mu$m) | 23 | 23 | 23 | 20 | 25 | 23 |
| Gas adsorption amount (mL/cm$^3$) | | 0.2 | 0.1 | 0.1 | 1.8 | 0.3 | 0.3 |
| Gas adsorption amount (mL/g-sample) | | 0.6 | 1.0 | 1.1 | 5.3 | 1.1 | 2.3 |
| Gas adsorption amount (mL/g-MOF) | | 0.7 | 1.5 | 2.3 | 6.9 | 1.2 | 3.3 |
| MOF dropout ratio (%) | | 44 | 20 | 0 | 2 | 16 | 0 |
| Maximum bending stress (M P a) | | 1.80 | 1.80 | 0.60 | 0.04 | 10 | 0.03 |
| MOF uniformity (%) | | 70 | 80 | 70 | 50 | - | 10 |
| Workability | Filling property evaluation (mm) | 5 or more | 5 or more | 5 or more | Less than 2 | 5 or more | Less than 2 |
| | MOF retention evaluation (%) | 90 | 92 | 100 | 99 | 95 | 100 |
| Gurley air permeability (sec/100 mL) | | 0.3 | 0.3 | 0.3 | 0.1 | 15 | 0.1 |

## Claims

1. A composite sheet, comprising:

   a sheet base material formed of fibers; and
   metal organic frameworks dispersed in the sheet base material, wherein
   the metal organic frameworks are supported on surfaces of the fibers,
   a ratio of a mass of the metal organic frameworks to a mass of the entire composite sheet is 80 mass% or more,
   one fiber forming a central region of the composite sheet in a thickness direction has a surface coverage by the metal organic frameworks of 60% or more and 100% or less, and
   a surface exposure ratio of the metal organic frameworks is 50% or more.

2. The composite sheet according to claim 1, wherein
   the fibers have a circumferential coverage of 80% or more and 100% or less, preferably 85% or more, and more preferably 90% or more, by the metal organic frameworks in at least part of one fiber in a cross section orthogonal to a longitudinal direction of the fiber.

3. The composite sheet according to claim 1 or 2, having a dropout ratio of the metal organic frameworks by shaking evaluation of 0 mass% or more and 20 mass% or less, preferably 18 mass% or less, more preferably 15 mass% or less, and still more preferably 9 mass% or less.

4. The composite sheet according to any one of claims 1 to 3, having a maximum bending stress of 0 MPa or more and 5 MPa or less, preferably 3 MPa or less, more preferably 1 MPa or less, and still more preferably 0.1 MPa or less.

5. The composite sheet according to any one of claims 1 to 4, wherein
the fibers include organic fibers.

6. The composite sheet according to any one of claims 1 to 5, wherein
the fibers include hydrophilic fibers and hydrophobic fibers.

7. The composite sheet according to claim 6, wherein
the hydrophilic fibers include cellulose fibers and the hydrophobic fibers include synthetic fibers.

8. The composite sheet according to any one of claims 1 to 7, wherein
the surface exposure ratio of the metal organic frameworks is 50% or more and 100% or less, preferably 70% or more, and more preferably 90% or more.

9. The composite sheet according to any one of claims 1 to 8, wherein
a ratio of a mass of a binder to the total mass of the one or mor metal organic frameworks and the binder is 0 mass% or more and 10 mass% or less, preferably 5 mass% or less, and more preferably 1 mass% or less.

10. The composite sheet according to any one of claims 1 to 9, wherein
a ratio of a mass of a binder to the mass of the entire composite sheet is 0 mass% or more and 10 mass% or less, preferably 5 mass% or less, and more preferably 1 mass% or less.

11. The composite sheet according to any one of claims 1 to 9, wherein
the composite sheet includes no binder.

12. The composite sheet according to any one of claims 1 to 11, wherein
one metal organic framework is supported directly on surfaces of the fibers.

13. The composite sheet according to any one of claims 1 to 12, comprising
one fiber having a layer of the metal organic frameworks formed on the surface of the fiber.

14. The composite sheet according to any one of claims 1 to 13, wherein
one fiber forming the central region of the composite sheet in the thickness direction has a surface coverage by the metal organic frameworks of 70% or more, preferably 80% or more.

15. The composite sheet according to any one of claims 1 to 14, wherein
the metal organic frameworks are capable of selectively adsorb carbon dioxide.

16. The composite sheet according to any one of claims 1 to 15, having a thickness of 0.2 mm or more and 10 mm or less, preferably 0.5 mm or more and 5 mm or less, and more preferably 1 mm or more.

17. The composite sheet according to any one of claims 1 to 16, having a Gurley air permeability of 0 sec/100 mL or more and 10 sec/100 mL or less, preferably 5 sec/100 mL or less, and more preferably 0.5 sec/100 mL or less.

18. The composite sheet according to any one of claims 1 to 17, wherein
the sheet base material is a non-woven fabric.

19. The composite sheet according to any one of claims 1 to 18, wherein
the composite sheet has a content ratio of the metal organic frameworks to the mass of the entire composite sheet of 80 mass% or more and 99 mass% or less, preferably 85 mass% or more.

20. The composite sheet according to any one of claims 1 to 19, wherein
a form of a fiber is maintained.

21. The composite sheet according to any one of claims 1 to 20, wherein
the composite sheet has a distance between fibers of the sheet base material of 1 $\mu$m or more and 1 000 $\mu$m or less, preferably 10 $\mu$m or more and 500 $\mu$m or less, more preferably 50 $\mu$m or more and 400 $\mu$m or less, and still more preferably 100 $\mu$m or more and 300 $\mu$m or less.

22. A method of producing a composite sheet in which metal organic frameworks are supported in a sheet base material formed of fibers, comprising:

preparing a first raw material solution and a second raw material solution, wherein

the first raw material solution includes either a metal ion or an organic ligand that are raw materials of the metal organic frameworks and
the second raw material solution includes the other;

impregnating the sheet base material with the first raw material solution; then
impregnating the sheet base material with the second raw material solution before the first raw material solution with which the sheet base material is impregnated dries;
drying the sheet base material impregnated with the second raw material solution;
applying heat treatment to the sheet base material impregnated with the second raw material solution; and
repeating a series of steps before the step of applying heat treatment such that a ratio of a mass of the metal organic frameworks to a mass of the entire composite sheet after the heat treatment is 80 mass% or more, wherein the series of steps includes

impregnating the sheet base material with the first raw material solution; then
impregnating the sheet base material with the second raw material solution before the first raw material solution with which the sheet base material is impregnated dries; and
drying the sheet base material impregnated with the second raw material solution.

23. The method of producing a composite sheet according to claim 22, wherein
one of the first raw material solution and the second raw material solution includes water of 30 mass% or more and 99 mass% or less, and the other includes an organic solvent of 30 mass% or more and 99 mass% or less.

24. The method of producing a composite sheet according to claim 22 or 23, wherein
the fibers include organic fibers.

25. The method of producing a composite sheet according to any one of claims 22 to 24, wherein
the fibers include hydrophilic fibers and hydrophobic fibers.

26. The method of producing a composite sheet according to any one of claims 22 to 25, wherein
the first raw material solution includes the metal ion and the second raw material solution includes the organic ligand.

27. The method of producing a composite sheet according to claim 26, wherein
a solvent of the first raw material solution includes water and a solvent of the second raw material solution includes an organic solvent.

28. The method of producing a composite sheet according to any one of claims 22 to 27, wherein

a total number of times to perform a series of processes before the heat treatment is 2 or more and 20 or less, preferably 2 or more and 15 or less, and more preferably 3 or more and 10 or less, and
the series of processes includes,

impregnating a sheet base material with the first raw material solution; then
impregnating the sheet base material with the second raw material solution before the first raw material solution with which the sheet base material is impregnated dries; and
drying the sheet base material impregnated with the second raw material solution.

29. The method of producing a composite sheet according to any one of claims 22 to 28, comprising dehydrating the metal organic frameworks by the heat treatment.

30. The method of producing a composite sheet according to any one of claims 22 to 29, wherein

the fibers include one or more core-sheath fibers, and
a core of the one or more core-sheath fibers has a melting point being higher than a temperature of the heat treatment, and a sheath of the core-sheath fiber has a melting point being higher than a temperature of the drying and being lower than the temperature of the heat treatment.

31. The method of producing a composite sheet according to any one of claims 22 to 30, wherein a time for impregnating the sheet base material with the first raw material solution is 0.1 minute or more and 30 minutes or less.

32. The method of producing a composite sheet according to any one of claims 22 to 31, wherein a time for impregnating the second raw material solution with the sheet base material is 0.1 minute or more and 30 minutes or less.

33. The method of producing a composite sheet according to any one of claims 22 to 32, wherein the sheet base material is impregnated with at least one of the first raw material solution or the second raw material solution by one or two or more selected from dropping with a dropper, spraying, spray coating, die coating, and curtain coating.

34. The method of producing a composite sheet according to any one of claims 26 to 27, wherein the first raw material solution has a concentration of the metal ion of 0.05 mol/L or more and 10 mol/L or less, and the second raw material solution has a concentration of the organic ligand of 0.05 mol/L or more and 10 mol/L or less.

MOF

Cross section of fiber

# FIG.1

Particle of MOF

Cross section
of fiber

# FIG.2

START

Prepare raw material solution — S01

Impregnate with first raw material solution — S02

Impregnate with second raw material solution — S03

Dry — S04

Apply heat treatment — S05

END

FIG.3

## INTERNATIONAL SEARCH REPORT

International application No.

**PCT/JP2024/022786**

### A. CLASSIFICATION OF SUBJECT MATTER

***D06M 13/50***(2006.01)i; ***B01J 20/22***(2006.01)i; ***D04H 1/541***(2012.01)i; ***D06M 23/00***(2006.01)i
FI:  D06M13/50; B01J20/22 A; D04H1/541; D06M23/00

According to International Patent Classification (IPC) or to both national classification and IPC

### B. FIELDS SEARCHED

Minimum documentation searched (classification system followed by classification symbols)

D06M13/50; B01J20/22; D04H1/541; D06M23/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| A | JP 2023-044403 A (DAIKIN INDUSTRIES, LTD.) 30 March 2023 (2023-03-30) examples 19, 20 | 1-34 |
| A | WO 2021/153626 A1 (TOYOBO CO., LTD.) 05 August 2021 (2021-08-05) examples | 1-34 |
| A | JP 2019-018175 A (SUMITOMO BAKELITE CO., LTD.) 07 February 2019 (2019-02-07) example 5 | 1-34 |
| A | US 2021/0189620 A1 (UNIV NORTH CAROLINA STATE) 24 June 2021 (2021-06-24) claims, paragraphs [0006]-[0008], [0011]-[0019], [0031]-[0051], examples | 1-34 |
| A | JP 2005-034693 A (TORAY INDUSTRIES, INC.) 10 February 2005 (2005-02-10) entire text | 1-34 |
| A | JP 8-503272 A (HOECHST CELANESE CORPORATION) 09 April 1996 (1996-04-09) entire text, all drawings | 1-34 |

☑ Further documents are listed in the continuation of Box C.   ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search

**09 September 2024**

Date of mailing of the international search report

**17 September 2024**

Name and mailing address of the ISA/JP

**Japan Patent Office (ISA/JP)**
**3-4-3 Kasumigaseki, Chiyoda-ku, Tokyo 100-8915**
**Japan**

Authorized officer

Telephone No.

Form PCT/ISA/210 (second sheet) (July 2022)

## INTERNATIONAL SEARCH REPORT

International application No.

**PCT/JP2024/022786**

### C. DOCUMENTS CONSIDERED TO BE RELEVANT

| Category* | Citation of document, with indication, where appropriate, of the relevant passages | Relevant to claim No. |
|---|---|---|
| A | US 2012/0141685 A1 (GAAB, M.) 07 June 2012 (2012-06-07)<br>abstract, claims, examples | 1-34 |
| A | CN 112002938 A (NANJING UNIVERSITY OF TECHNOLOGY) 27 November 2020 (2020-11-27)<br>claims, examples | 1-34 |
| A | JP 2016-193957 A (TOSOH CORP.) 17 November 2016 (2016-11-17)<br>claim 5 | 1-34 |
| A | JP 5150617 B2 (BASF SE) 20 February 2013 (2013-02-20)<br>claim 1 | 1-34 |

Form PCT/ISA/210 (second sheet) (July 2022)

## INTERNATIONAL SEARCH REPORT
### Information on patent family members

International application No.

**PCT/JP2024/022786**

| Patent document cited in search report | | | Publication date (day/month/year) | Patent family member(s) | | | Publication date (day/month/year) |
|---|---|---|---|---|---|---|---|
| JP | 2023-044403 | A | 30 March 2023 | WO | 2023/042772 | A1 | |
| | | | | CN | 117980065 | A | |
| WO | 2021/153626 | A1 | 05 August 2021 | CN | 115087499 | A | |
| | | | | KR | 10-2022-0128343 | A | |
| JP | 2019-018175 | A | 07 February 2019 | (Family: none) | | | |
| US | 2021/0189620 | A1 | 24 June 2021 | (Family: none) | | | |
| JP | 2005-034693 | A | 10 February 2005 | (Family: none) | | | |
| JP | 8-503272 | A | 09 April 1996 | US | 5486410 | A | |
| | | | | WO | 1994/011556 | A1 | |
| US | 2012/0141685 | A1 | 07 June 2012 | (Family: none) | | | |
| CN | 112002938 | A | 27 November 2020 | (Family: none) | | | |
| JP | 2016-193957 | A | 17 November 2016 | (Family: none) | | | |
| JP | 5150617 | B2 | 20 February 2013 | US | 2009/0092818 | A1 | |
| | | | | WO | 2007/118841 | A2 | |
| | | | | EP | 2010315 | A2 | |
| | | | | KR | 10-2008-0112382 | A | |
| | | | | CN | 101448568 | A | |
| | | | | MX | 2008012765 | A | |

Form PCT/ISA/210 (patent family annex) (July 2022)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021191913 A
- CN 112002938
- CN 109881483